# EUROPEAN PATENT APPLICATION

(11) **EP 4 012 806 A1**
(43) Date of publication of application: **15.06.2022**
(21) Application number: 20849441.9
(22) Date of filing: 06.08.2020
(51) Int. Cl.: H01M 4/525, C01G 53/00, H01M 4/505

(54) **NICKEL COMPOSITE HYDROXIDE PARTICLES, POSITIVE ELECTRODE ACTIVE MATERIAL HAVING NICKEL COMPOSITE HYDROXIDE PARTICLES AS PRECURSORS, AND METHOD FOR PRODUCING POSITIVE ELECTRODE ACTIVE MATERIAL**

(30) Priority: 06.08.2019 JP 2019144822
(71) Applicant: Tanaka Chemical Corporation, Fukui-shi, Fukui 910-3131 (JP); SANYO Electric Co., Ltd., Daito-shi Osaka 574-8534 (JP)
(72) Inventor: YASUDA, Taiki, Fukui-shi, Fukui 910-3131 (JP); KATAGIRI, Kazuki, Fukui-shi, Fukui 910-3131 (JP); MASUKAWA, Takaaki, Fukui-shi, Fukui 910-3131 (JP); TAKASHIMA, Masahiro, Fukui-shi, Fukui 910-3131 (JP); CHIBA, Takeshi, Daito-shi, Osaka 574-8534 (JP); KAWAMOTO, Yasunobu, Daito-shi, Osaka 574-8534 (JP); SAKAMOTO, Takahiro, Daito-shi, Osaka 574-8534 (JP); KINOSHITA, Masahiro, Daito-shi, Osaka 574-8534 (JP)
(74) Representative: Weickmann, Hans
(86) International application number: PCT/JP2020/030131
(87) International publication number: WO 2021/025101

(57) **Abstract**

The present invention provides a precursor of a positive electrode active material, capable of obtaining the positive electrode active material that can exhibit a high discharge capacity and high charge/discharge efficiency, by being mounted on a secondary battery using a non-aqueous electrolyte, and the positive electrode active material obtained from the precursor, as well as a method for producing the positive electrode active material.

The nickel composite hydroxide particles that are precursors of a positive electrode active material of a non-aqueous electrolyte secondary battery, having a void ratio of 45.0% or more and 55.0% or less.

## Description

### Technical Field

The present invention relates to nickel composite hydroxide particles, a positive electrode active material using the nickel composite hydroxide particles as precursors, and a method for producing the same, and particularly relates to nickel composite hydroxide particles, a positive electrode active material using the nickel composite hydroxide particles as the precursors, and a method for producing the same, which are capable of obtaining a non-aqueous electrolyte secondary battery excellent in a discharge capacity and charge/discharge efficiency.

### Background Art

In recent years, from the viewpoint of reducing the environmental load, secondary batteries have been used in a wide range of fields such as mobile devices and vehicles that use electricity or combine it for use as a power source. Examples of the secondary batteries include a secondary battery using a non-aqueous electrolyte such as a lithium ion secondary battery. The secondary battery using a non-aqueous electrolyte, such as lithium ion secondary battery is suitable for miniaturization and weight reduction, and has excellent characteristics such as high cycle characteristics and high rate characteristics.

Moreover, in order to further improve the cycle characteristics and the rate characteristics, improvement of a filling density of the positive electrode active material mounted on a positive electrode, resulting in improvement of a tap density of composite hydroxide particles that are precursors of the positive electrode active material, has been proposed. In order to improve the tap density of the composite hydroxide particles, it is said to be effective to improve circularity of the composite hydroxide particles. Therefore, a composite compound containing nickel and manganese having a tap density of 1.9 g/cm³ or more and an average circularity of 0.960 or more has been proposed (Patent Literature 1).

Although the positive electrode active material having excellent cycle characteristics and rate characteristics in the composite compound of Patent Literature 1, can be obtained by improving the tap density and the circularity, it has room for improvement in terms of a discharge capacity and charge/discharge efficiency that are other characteristics required as a positive electrode active material.

### Document List

### Patent Literature

Patent Literature 1: International Publication No. WO2014/175191

### Summary of Invention

### Technical Problem

In view of the above circumstances, an object of the present invention is to provide a precursor of a positive electrode active material, capable of obtaining the positive electrode active material that can exhibit a high discharge capacity, and high charge/discharge efficiency by being mounted on a secondary battery using a non-aqueous electrolyte, and the positive electrode active material obtained from the precursor, as well as a method for producing the positive electrode active material.

### Solution to Problem

The gist of configuration of the present invention is as follows:
[1] Nickel composite hydroxide particles that are precursors of a positive electrode active material of a non-aqueous electrolyte secondary battery, having a void ratio of 45.0% or more and 55.0% or less.
[2] Nickel composite hydroxide particles that are precursors of a positive electrode active material of a non-aqueous electrolyte secondary battery, having an average circularity of 0.85 or more and 0.94 or less.
[3] The nickel composite hydroxide particles according to [1], having an average circularity of 0.85 or more and 0.94 or less.
[4] The nickel composite hydroxide particles according to any one of [1] to [3], wherein a particle diameter of the nickel composite hydroxide particles having a cumulative volume percentage of 50% by volume (D50) is 5.0 µm or more and 25.0 µm or less.
[5] The nickel composite hydroxide particles according to any one of [1] to [4], wherein the nickel composite hydroxide particles comprise Ni, Co, and one or more additive metal elements M selected from the group consisting of Mn, Al, Ca, Ti, V, Cr, Zr, Nb, Mo, and W, and a molar ratio of Ni: Co : M is 1-x-y : x : y, where 0 < x ≤ 0.2 and 0 < y ≤ 0.1.
[6] A positive electrode active material of a non-aqueous electrolyte secondary battery, wherein the nickel composite hydroxide particles according to any one of [1] to [5] are calcined with a lithium compound.
[7] A method for producing a positive electrode active material of a non-aqueous electrolyte secondary battery, comprising: a step of adding a lithium compound to the nickel composite hydroxide particles according to any one of [1] to [5] to obtain a mixture, or a step of subjecting the nickel composite hydroxide particles according to any one of [1] to [5] to an oxidation treatment to prepare nickel composite oxide particles followed by addition of a lithium compound to obtain a mixture of the lithium compound and the nickel composite oxide particles; and a step of calcining the mixture.

In the aspect of [1], the "void ratio" (unit: %) refers to a value obtained by accommodating a predetermined amount of nickel composite hydroxide particles in a cell having a constant volume, compressing them at a pressure of 21.2 MPa, and thereby measuring a compressed volume (V) of the nickel composite hydroxide particles, and calculating the void ratio according to the formula [V - a mass of composite hydroxide particles × (1/d)]/V × 100 (%) from a true density (d) of the nickel composite hydroxide particles. For example, by using a powder compressor that is an accessory apparatus of a high-precision surface tension meter DY-700 (manufactured by Kyowa Interface Science Co., Ltd.), the compressed volume (V) can be measured by accommodating 6.5 g by mass of nickel composite hydroxide particles in a cell with a diameter of 10 mm and a height of 100 mm (volume 7.85 ml) and compressing them at a pressure of 21.2 MPa. Moreover, the true density (d) is a value measured by a gas replacement type dry automatic density meter.

In the aspect of [2], the circularity is an index of a sphere when a nickel composite hydroxide particle is projected two-dimensionally. The term "circularity" as used herein refers to a value obtained by photographing a nickel composite hydroxide particles to be measured one by one with a CCD camera, etc., and calculating each value as a circumference of a circle having the same area as the particle image/the circumference of the particle image. An apparatus used for the above measurement includes, for example, a wet flow type particle diameter/shape analyzer "FPIA-3000S" (manufactured by Sysmex Corporation). Further, the "average circularity" as used herein refers to a value obtained by analyzing circularity based on the number and calculating the average value.

### Effects of Invention

According to an aspect of the present invention, the void ratio being 45.0% or more and 55.0% or less can thereby exhibit high discharge capacity and high charge/discharge efficiency by mounting the positive electrode active material using this nickel composite hydroxide particles as precursors on a secondary battery.

According to the aspect of the present invention, the average circularity of the nickel composite hydroxide particles being 0.85 or more and 0.94 or less, can thereby exhibit high discharge capacity and high charge/discharge efficiency by mounting the positive electrode active material using this nickel composite hydroxide particles as the precursors on the secondary battery.

According to the aspect of the present invention, the void ratio being 45.0% or more and 55.0% or less as well as the average circularity of the nickel composite hydroxide particles being 0.85 or more and 0.94 or less can further improve the discharge capacity and charge/discharge efficiency by mounting the positive electrode active material using this nickel composite hydroxide particles as the precursors on the secondary battery.

### Description of Embodiments

Hereinafter, the nickel composite hydroxide particles that is the precursor of the positive electrode active material of a non-aqueous electrolyte secondary battery of the present invention will be described in detail below. The nickel composite hydroxide particles that are the precursors of the positive electrode active material of a non-aqueous electrolyte secondary battery of the present invention (hereinafter, may be simply referred to as "nickel composite hydroxide particles of the present invention") have a void ratio of 45.0% or more and 55.0% or less. When the nickel composite hydroxide particles of the present invention are filled, the shape of the nickel composite hydroxide particles is adjusted so that a predetermined amount of voids is formed between the nickel composite hydroxide particles.

The nickel composite hydroxide particles of the present invention having a void ratio of 45.0% or more and 55.0% or less, can impart the high discharge capacity and high charge/discharge efficiency to a non-aqueous electrolyte secondary battery. A type of an apparatus for compressing powder used for calculating the aforementioned void ratio is not particularly limited as long as it is an apparatus capable of compressing the nickel composite hydroxide particles of the present invention accommodated in a cell having a constant volume at a pressure of 21.2 MPa, but includes, for example, a powder compressor (manufactured by Kyowa Interface Science Co., Ltd.) that is an accessory apparatus of a high-precision surface tension meter DY-700.

In the present invention, the aforementioned void ratio is not particularly limited as long as it is in the range of 45.0% or more and 55.0% or less, but a lower limit value thereof is preferably 46.0% or more from the viewpoint of further improving the discharge capacity and charge/discharge efficiency. An upper limit value of the void ratio is, on the other hand, preferably 53.0% or less and particularly preferably 52.0% or less from the viewpoint of further improving the discharge capacity and charge/discharge efficiency without impairing other characteristics of the positive electrode active material such as cycle characteristics, by maintaining a mounting density of the positive electrode active material on the positive electrode. It is noted that the above upper limit values and lower limit values can be arbitrarily combined.

As described above, the shape of the nickel composite hydroxide particles of the present invention is adjusted so that they have the aforementioned void ratio. The shape of the nickel composite hydroxide particles of the present invention has, for example, an average circularity of 0.85 or more and 0.94 or less. Therefore, the nickel composite hydroxide particles of the present invention has a shape having lower circularity as compared with conventional precursors.

The nickel composite hydroxide particles of the present invention having an average circularity of 0.85 or more and 0.94 or less can thereby impart the high discharge capacity and high charge/discharge efficiency to a non-aqueous electrolyte secondary battery.

The average circularity of the nickel composite hydroxide particles of the present invention is not particularly limited as long as it is in the range of 0.85 or more and 0.94 or less, but a lower limit value thereof is preferably 0.87 or more and particularly preferably 0.89 or more from the viewpoint of further improving the discharge capacity and charge/discharge efficiency without impairing other characteristics of the positive electrode active material such as cycle characteristics, by maintaining the mounting density of the positive electrode active material on the positive electrode. An upper limit value of the average circularity is, on the other hand, preferably 0.92 or less and particularly preferably 0.91 or less, from the viewpoint of further improving the discharge capacity and charge/discharge efficiency. It is noted that the above upper limit values and lower limit values can be arbitrarily combined.

A component of the nickel composite hydroxide particles of the present invention includes, for example, a composite hydroxide containing nickel (Ni), cobalt (Co), and one or more additive metal elements M selected from the group consisting of manganese (Mn), aluminum (Al), calcium (Ca), titanium (Ti), vanadium (V), chromium (Cr), zirconium (Zr), niobium (Nb), molybdenum (Mo) and tungsten (W). Namely, the nickel composite hydroxide particles contain Ni and Co as essential metal components, and further contain one or more of the metal elements of Mn, Al, Ca, Ti, V, Cr, Zr, Nb, Mo and W as additive metal elements (M).

A molar ratio of Ni: Co : M is not particularly limited and can be appropriately selected depending on, for example, the conditions of use of the positive electrode active material obtained from the nickel composite hydroxide particles. The molar ratio of Ni: Co : M includes, for example, 1-x-y : x : y where 0 < x ≤ 0.2, 0 < y ≤ 0.1. The additive metal element preferably contains Al and Mn and particularly preferably Al from the viewpoint of further improving the discharge capacity and charge/discharge efficiency.

The nickel composite hydroxide particles of the present invention is a secondary particle formed by aggregation of a plurality of primary particles. The particle diameter of the nickel composite hydroxide particles of the present invention is not particularly limited, but for example, a lower limit value of a particle diameter having a cumulative volume percentage of 50% by volume (hereinafter, may be simply referred to as "D50") is preferably 5.0 µm or more and particularly preferably 8.0 µm or more from the viewpoint of improvement of a density. An upper limit value of D50 of the nickel composite hydroxide particles of the present invention is, on the other hand, preferably 25.0 µm or less and particularly preferably 20.0 µm or less from the viewpoint of improving the contactability with the non-aqueous electrolyte. The above upper limit values and lower limit values can be arbitrarily combined.

Moreover, a lower limit value of a particle diameter having a cumulative volume percentage of 90% by volume (hereinafter, may be simply referred to as "D90") of the nickel composite hydroxide particles of the present invention is preferably 10.0 µm or more and particularly preferably 15.0 µm or more from the viewpoint of improvement of the density. An upper limit value of D90 of the nickel composite hydroxide particles of the present invention is, on the other hand, preferably 40.0 µm or less and particularly preferably 35.0 µm or less from the viewpoint of improving the contactability with the non-aqueous electrolyte. It is noted that the above upper limit values and lower limit values can be arbitrarily combined. Further, a lower limit value of the particle diameter having a cumulative volume percentage of 10% by volume (hereinafter, may be simply referred to as "D10") of the nickel composite hydroxide particles of the present invention is preferably 1.0 µm or more and particularly preferably 5.0 µm or more from the viewpoint of improvement of the density. An upper limit value of D10 of the nickel composite hydroxide particles of the present invention is, on the other hand, preferably 15.0 µm or less and particularly preferably 10.0 µm or less from the viewpoint of improving the contactability with the non-aqueous electrolyte. The above upper limit values and lower limit values can be arbitrarily combined. It is noted that D10, D50, and D90 refer to particle diameters measured by a particle size distribution measuring apparatus by using a laser diffraction/scattering method.

Moreover, a particle diameter distribution width of the nickel composite hydroxide particles of the present invention is not particularly limited and it can be appropriately selected depending on, for example, the conditions of use of the positive electrode active material, and, for example, a lower limit value of (D90 - D10)/D50 is preferably 0.40 or more, more preferably 0.50 or more, and particularly preferably 0.70 or more from the viewpoint of improving the mounting density of the positive electrode active material. An upper limit value of (D90 - D10)/D50 of the nickel composite hydroxide particles of the present invention is, on the other hand, preferably 1.10 or less and particularly preferably 1.00 or less from the viewpoint of uniformizing various properties of the positive electrode active material regardless of a size of the particle diameter of the nickel composite hydroxide particles. The above upper limit values and lower limit values can be arbitrarily combined.

A BET specific surface area of the nickel composite hydroxide particles of the present invention is not particularly limited, but for example, a lower limit value thereof is preferably 30 m²/g or more and particularly preferably 35 m²/g or more from the viewpoint of improving the filling degree of the positive electrode active material in the positive electrode and a contact area with a non-aqueous electrolyte. An upper limit value of the BET specific surface area of the nickel composite hydroxide particles of the present invention is, on the other hand, preferably 60 m²/g or less and particularly preferably 50 m²/g or less from the viewpoint of improving the crush strength of the positive electrode active material. It is noted that the above upper limit values and lower limit values can be arbitrarily combined.

Next, a method for producing nickel composite hydroxide particles of the present invention will be explained. First, by a coprecipitation method, a solution containing metal salts, for example, a solution containing a nickel salt (for example, the sulfate), a cobalt salt (for example, the sulfate) and a salt of the additive metal element (for example, the sulfate), a complexing agent, and a pH adjuster are appropriately added, thereby allowing a neutralization reaction to occur in a reaction vessel to prepare crude nickel composite hydroxide particles, and to obtain a slurry suspension containing the crude nickel composite hydroxide particles. A solvent for the suspension that is, for example, water, is used.

The complexing agent is not particularly limited as long as it can form a complex with ions of metal element, for example, ions of nickel, cobalt, and the additive metal element in an aqueous solution, and includes, for example, an ammonium ion donor. The ammonium ion donor includes, for example, aqueous ammonia, ammonium sulfate, ammonium chloride, ammonium carbonate, ammonium fluoride, etc. Upon neutralization reaction, in order to adjust a pH value of an aqueous solution, optionally an alkaline metal hydroxide (for example, sodium hydroxide or potassium hydroxide) may be added as the pH adjuster.

When the aforementioned metal salt solution, the pH adjuster, and the ammonium ion donor are appropriately supplied to a reaction vessel in a continuous manner, and the substances in the reaction vessel are appropriately stirred, the metals (for example, nickel, cobalt, the additive metal element) of the metal salt solution perform a coprecipitation reaction to prepare a crude nickel composite hydroxide particle. Upon the coprecipitation reaction, a temperature of the reaction vessel is controlled in the range of, for example, 10°C to 80°C and preferably 20 to 70°C. When the pH adjuster and the ammonium ion donor are supplied to the reaction vessel to allow for the coprecipitation reaction, an ammonia concentration of a mixed liquid in the reaction vessel and a pH based on a liquid temperature of 40°C are controlled within predetermined ranges, and a stirrer rotation speed and retention time of the stirring apparatus installed in the reaction vessel are adjusted within predetermined ranges, thereby to enable the void ratio between the nickel composite hydroxide particles to be adjusted to 45.0% or more and 55.0% or less and to enable the average circularity of the nickel composite hydroxide particles to be adjusted to 0.85 or more and 0.94 or less. Preferred ranges of the ammonia concentration and the pH based on a liquid temperature of 40°C may need to be adjusted depending on a composition of the crude nickel composite hydroxide particles, and for example, the ammonia concentration is preferably less than 12.0 g/L and particularly preferably 7.0 g/L or more and 11.0 g/L or less. Moreover, the pH based on a liquid temperature of 40°C is preferably 11.0 or more and 12.5 or less and particularly preferably 11.5 or more and 12.3 or less. Further, the stirrer rotation speed of the stirring apparatus needs to be appropriately adjusted because a shearing force applied to the particles changes depending on a volume of the reaction vessel, a type of stirring blade, and a retention time. For example, in the case of using three propeller blades in a reaction vessel having a volume of 15 L and carrying out a coprecipitation reaction with a retention time of 5 to 10 hours, the stirrer rotation speed is preferably 1,000 rpm or more and 1,500 rpm or less and particularly preferably 1,100 rpm or more and 1,400 rpm or less.

The stirring apparatus used in the method for producing the nickel composite hydroxide particles of the present invention includes, for example, a stirring apparatus having stirring blades provided with a plurality of propeller blades at the tip of the stirring shaft. Moreover, a reaction vessel used in the method for producing the nickel composite hydroxide particles of the present invention includes, for example, a continuous type allowing obtained crude nickel composite hydroxide particles to be overflowed for separating them, or a batch type that does not discharge them out of the system until a reaction is completed.

As described above, after the crude nickel composite hydroxide particles obtained in the neutralization reaction step are filtered from the suspension, they are washed with an alkaline aqueous solution to remove impurities contained in the crude nickel composite hydroxide particles, and then to obtain purified nickel composite hydroxide particles (the nickel composite hydroxide particles of the present invention). Following solid-liquid separation, a solid phase containing the nickel composite hydroxide particles is optionally washed with water, and the nickel composite hydroxide particles are heat-treated and dried, thereby to enable to obtain powdery nickel composite hydroxide particles.

Next, the positive electrode active material of a non-aqueous electrolyte secondary battery using the nickel composite hydroxide particles of the present invention as the precursor (hereinafter, may be simply referred to as the "positive electrode active material of the present invention") will be described. The positive electrode active material of the present invention is an aspect such that the nickel composite hydroxide particles of the present invention that is the precursor, has been calcined with, for example, a lithium compound. A crystal structure of the positive electrode active material of the present invention is a layered structure, and is more preferably a hexagonal crystal structure or a monoclinic crystal structure in order to obtain a secondary battery having a high discharge capacity. The positive electrode active material of the present invention can be used, for example, as the positive electrode active material of a lithium ion secondary battery. When producing the positive electrode active material of the present invention, a step of preparing a nickel composite hydroxide particle into a nickel composite oxide particle may be carried out in advance. A method for preparing the nickel composite oxide particles from the nickel composite hydroxide particles can include, for example, an oxidation treatment of calcining the nickel composite hydroxide particles in the range of a temperature of 300°C or higher and 800°C or lower for 1 hour or longer and 10 hours or shorter in an atmosphere in which oxygen gas is present.

Next, a method for producing the positive electrode active material using the nickel composite hydroxide particles of the present invention as the precursors will be described. For example, the method for producing the positive electrode active material of the present invention is a method for first adding a lithium compound to the nickel composite hydroxide particles or nickel composite oxide particles to prepare a mixture of the nickel composite hydroxide particles or nickel composite oxide particles and the lithium compound. The lithium compound is not particularly limited as long as it is a compound having lithium, and can include, for example, lithium carbonate and lithium hydroxide.

Next, the positive electrode active material of the present invention can be produced by calcining the mixture as obtained above. Calcination conditions include, for example, a calcination temperature of 700°C or higher and 1000°C or lower, a rate of temperature rise of 50°C/h or higher and 300°C/h or lower, and a calcination time of 5 hours or longer and 20 hours or shorter. The calcination atmosphere is not particularly limited, and includes, for example, the atmosphere and oxygen. Moreover, a calcination furnace used for calcination is not particularly limited and includes, for example, a stationary box furnace and a roller hearth continuous furnace.

The calcined product obtained as described above may be washed. Pure water or an alkaline cleaning solution can be used for cleaning. The alkaline cleaning solution can include, for example, an aqueous solution of one or more anhydrides and hydrates thereof selected from the group consisting of LiOH (lithium hydroxide), NaOH (sodium hydroxide), KOH (potassium hydroxide), Li₂CO₃ (lithium carbonate), Na₂CO₃ (sodium carbonate), K₂CO₃ (potassium carbonate) and (NH₄)₂CO₃ (ammonium carbonate). Moreover, the alkaline cleaning solution that is aqueous ammonia can also be used.

In the cleaning step, a method for allowing the cleaning solution and a calcined product to contact with each other includes, for example, a method for charging the calcined product into an aqueous solution of each cleaning solution followed by stirring, or a method for applying an aqueous solution of each cleaning solution as shower water to the calcined product, or a method for charging the calcined product into an aqueous solution of the cleaning solution followed by stirring, then separating the calcined product from the aqueous solution of each cleaning solution, and next applying an aqueous solution of each cleaning solution as shower water to the calcined product after the separation.

When carrying out the aforementioned cleaning, after the cleaning, the cleaning material is separated from the cleaning solution by filtration, etc., and a heat treatment is carried out. The heat treatment conditions include, for example, a heat treatment temperature of 100°C or higher and 600°C or lower and a heat treatment time of 1 hour or longer and 20 hours or shorter. An atmosphere of the heat treatment is not particularly limited, but includes, for example, the atmosphere, oxygen, a vacuum atmosphere, etc.

Next, a positive electrode that uses the positive electrode active material using the nickel composite hydroxide particles of the present invention as the precursors, will be described. The positive electrode comprises a positive electrode current collector and a positive electrode active material layer formed on the surface of the positive electrode current collector by using the positive electrode active material of the present invention. The positive electrode active material layer has the positive electrode active material of the present invention, a binder, and optionally a conductive auxiliary agent. The conductive auxiliary agent is not particularly limited as long as it can be used for a non-aqueous electrolyte secondary battery, and for example, a carbon material can be used. The carbon material can include graphite powder, carbon black (for example, acetylene black), and a fibrous carbon material. The binder is not particularly limited, but can include polymer resins, for example, polyvinylidene difluoride (PVdF), butadiene rubber (BR), polyvinyl alcohol (PVA), carboxymethyl cellulose (CMC), and polytetrafluoroethylene (PTFE), etc., as well as combinations thereof. The positive electrode current collector is not particularly limited, but a belt-shaped member made of a metal material such as Al, Ni, or stainless steel can be used. Among them, a member such that A1 is used as a forming material and is processed into a thin film from the viewpoint of the facilitation of processing and inexpensiveness.

The method for producing the positive electrode is a method for example, first mixing the positive electrode active material of the present invention, a binder, and optionally a conductive auxiliary agent to prepare a positive electrode active material slurry. Next, a positive electrode current collector is coated with the aforementioned positive electrode active material slurry by a known filling method, dried, pressed and fixed to enable the positive electrode to be obtained.

The positive electrode obtained as described above, a negative electrode having a negative electrode current collector and a negative electrode active material layer containing a negative electrode active material, formed on a surface of the negative electrode current collector, an electrolytic solution containing a predetermined electrolyte, and a separator, are mounted by a known method, thereby to enable assembling of a non-aqueous electrolyte secondary battery.

The electrolyte contained in the electrolytic solution include, for example, LiClO₄, LiPF₆, LiAsF₆, LiSbF₆, LiBF₄, LiCF₃SO₃, LiN (SO₂CF₃)₂, LiN(SO₂C₂F₅)₂, LiN(SO₂CF₃)(COCF₃), Li(C₄F₉SO₃), LiC(SO₂CF₃)₃ Li₂B₁₀Cl₁₀, LiBOB where BOB denotes bis(oxalato)borate, LiFSI where FSI denotes bis(fluorosulfonyl)imide, a lower aliphatic carboxylic acid lithium salt, a lithium salts such as LiAlCl₄. They may be used alone or in combination of two or more.

The solvent for the electrolyte contained in the electrolytic solution includes, for example, carbonates, such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy) ethane; ethers, such as 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran; esters, such as methyl formate, methyl acetate and γ-butyrolactone; nitriles, such as acetonitrile and butyronitrile; amides, such as N, N-dimethylformamide and N, N-dimethylacetamide; carbamates, such as 3-methyl-2-oxazolidone; sulfur-containing compounds, such as sulfolane, dimethyl sulfoxide, and 1,3-propanesultone, or a compound such that a fluoro group is further introduced to these organic solvents (such that one or more of hydrogen atoms of a dispersing medium are substituted with fluorine atoms), etc. They may be used alone or in combination of two or more.

Moreover, a solid electrolyte may be used instead of the electrolytic solution containing the aforementioned electrolyte. The solid electrolyte includes, for example, organic-based polymer electrolytes, such as a polyethylene oxide-based polymer compound, a polymer compound containing at least one or more types of a polyorganosiloxane chain or polyoxyalkylene chain. Further, a gel type compound such that a non-aqueous electrolytic solution is retained in a polymer compound, can also be used. Moreover, the solid electrolyte includes an inorganic-based solid electrolyte containing sulfides, such as Li₂S-SiS₂, Li₂S-GeS₂, Li₂S-P₂S₅, Li₂S-B₂S₃, Li₂S-SiS₂-Li₃PO₄, Li₂S-SiS₂-Li₂SO₄, Li₂S-GeS₂-P₂S₅. They may be used singly or in combination of two or more.

The separator includes, for example, a material having a form such as a porous film, a non-woven fabric, and a woven fabric, using a material such as a polyolefin resin such as polyethylene and polypropylene, a fluororesin, and a nitrogen-containing aromatic polymer.

### Examples

Next, examples of the nickel composite hydroxide particles of the present invention will be described, but the present invention is not limited to these examples as long as the gist of the present invention is not deviated.

### Production of nickel composite hydroxide particles of Examples and Comparative Example

### Production of nickel composite hydroxide particles of Example 1

An aqueous solution prepared by dissolving nickel sulfate, cobalt sulfate, and aluminum sulfate at a predetermined ratio, an aqueous solution of ammonium sulfate (ammonium ion donor), and an aqueous solution of sodium hydroxide were dropwisely added into a reaction vessel, and a mixed liquid in the reaction vessel having a volume of 15 L was continuously stirred with a stirrer at a stirrer rotation speed of 1,200 rpm while maintaining the pH based on a liquid temperature of 40°C of 12.1 and the ammonia concentration at 9.5 g/L. The stirrer having stirring blades provided with three propeller blades at the tip of the stirring shaft. Moreover, the temperature of the mixed liquid in the reaction vessel was maintained at 40.0°C. The crude nickel composite hydroxide particles produced by the neutralization reaction were allowed to retain in the reaction vessel for 10 hours, and then to be overflowed from an overflow pipe of the reaction vessel and taken out as a suspension. After filtering the suspension of the crude nickel composite hydroxide particles taken out, they were washed with an alkaline aqueous solution and subjected to solid-liquid separation. Thereafter, the separated solid phase was washed with water and further subjected to each treatment of dehydration and drying to obtain purified nickel composite hydroxide particles.

### Production of nickel composite hydroxide particles of Example 2

Purified nickel composite hydroxide particles were obtained in the same manner as in Example 1 except that the pH based on the liquid temperature of 40°C of the mixed liquid in the reaction vessel was maintained at 11.9 and the ammonia concentration was maintained at 7.5 g/L.

### Production of nickel composite hydroxide particles of Example 3

Purified nickel composite hydroxide particles were obtained in the same manner as in Example 1 except that the proportion of nickel sulfate, cobalt sulfate, and aluminum sulfate was changed, the pH based on the liquid temperature of 40°C of the mixed liquid in the reaction vessel was maintained at 12.0, and the ammonia concentration was maintained at 9.0 g/L.

### Production of nickel composite hydroxide particles of Example 4

Purified nickel composite hydroxide particles were obtained in the same manner as in Example 1 except that the proportion of nickel sulfate, cobalt sulfate, and aluminum sulfate was changed to the same proportion as in Example 3, the temperature of the mixed liquid in the reaction vessel was 45.0°C and the retention time in the reaction vessel was 6 hours.

### Production of nickel composite hydroxide particles of Comparative Example

Purified nickel composite hydroxide particles were obtained in the same manner as in Example 1 except that the pH based on the liquid temperature of 40°C of the mixed liquid in the reaction vessel was maintained at 12.7, the ammonia concentration was maintained at 12.0 g/L, the stirrer rotation speed was 1,500 rpm, and the mixed liquid was retained in the reaction vessel for 14 hours.

Table 1 below shows the neutralization reaction conditions of the nickel composite hydroxide particles of Examples 1 to 4 and Comparative Example.

The evaluation items of the physical properties of the nickel composite hydroxide particles of Examples 1 to 4 and Comparative Example are as follows.

### (1) Composition analysis of nickel composite hydroxide particles

Composition analysis was carried out by dissolving the obtained nickel composite hydroxide particles in hydrochloric acid and then using an inductively coupled plasma emission spectrometer (Optima 7300DV, manufactured by PerkinElmer Japan Co., Ltd.).

### (2) D10, D50, and D90

They were measured with a particle size distribution measuring device (LA-950, manufactured by HORIBA, Ltd.) (the principle is based on a laser diffraction/scattering method).

### (3) BET specific surface area

After 1 g of nickel composite hydroxide particles was dried at 105°C for 30 minutes in a nitrogen atmosphere, they were measured by a single pointBET method using a specific surface area measuring apparatus (Macsorb, manufactured by Mountech Co., Ltd.).

Table 1 below shows the evaluation results of the physical properties of the nickel composite hydroxide particles of Examples 1 to 4 and Comparative Example.

**[Table 1]**

| | Unit | Example 1 | Example 2 | Example 3 | Example 4 | Comparative Example |
|---|---|---|---|---|---|---|
| Neutralization temperature | °C | 40,0 | 40,0 | 40,0 | 45,0 | 40,0 |
| Neutralization pH | - | 12,1 | 11,9 | 12,0 | 12,1 | 12,7 |
| Ammonium concentration | g/L | 9,5 | 7,5 | 9,0 | 9,5 | 12,0 |
| Stirrer rotation speed | rpm | 1200 | 1200 | 1200 | 1200 | 1500 |
| Retention time | hr | 10 | 10 | 10 | 6 | 14 |
| D10 | µm | 6,7 | 6,3 | 6,8 | 7,1 | 6,8 |
| D50 | µm | 11,9 | 13,1 | 12,0 | 12,6 | 12,4 |
| D90 | µm | 18,4 | 19,8 | 18,5 | 19,6 | 19,7 |
| BET specific surface area | m²/g | 44 | 48 | 50 | 58 | 28 |
| Ni | mol% | 88,0 | 88,0 | 91,0 | 91,0 | 88,0 |
| Co | mol% | 9,0 | 9,0 | 4,0 | 4,0 | 9,0 |
| Al | mol% | 3,0 | 3,0 | 5,0 | 5,0 | 3,0 |

### Void ratio (%)

A compressed volume (V) of the nickel composite hydroxide particles per 6.5 g by mass was measured by accommodating 6.5 g by mass of nickel composite hydroxide particles in a cell with a diameter of 10 mm and a height of 100 mm (volume 7.85 ml) by using a powder compressor that is an accessory apparatus of the high-precision surface tension meter DY-700 (manufactured by Kyowa Interface Science Co., Ltd.) and compressing them at a pressure of 21.2 MPa. The void ratio was calculated according to the formula: [V - the mass of composite hydroxide particles × (1/d)]/V × 100 using a true density (d) of the nickel composite hydroxide particles. It is noted that the true density (d) was measured by using "AccuPyc II 1340" (manufactured by Shimadzu Corporation) that was a gas replacement type dry automatic density meter. The measurement conditions for the true density that were a filling pressure of 19.500 psig, an equilibrium rate of 0.005 psig/min, a sample weight of 3.0000 g, and a helium gas as the gas, were employed.

### Average circularity of nickel composite hydroxide particles

Following measurement of the nickel composite hydroxide particles under HRP measurement mode conditions by using a wet flow type particle diameter/shape analyzer "FPIA-3000S" (manufactured by Sysmex Corporation) and an objective lens standard (10×), the circularity was analyzed based on the number of particles, and an average value was calculated to determine the average circularity.

Table 2 below shows the average circularity, true density, and void ratio of the nickel composite hydroxide particles of Examples 1 to 4 and Comparative Example.

**[Table 2]**

| | Unit | Example 1 | Example 2 | Example 3 | Example 4 | Comparative Example |
|---|---|---|---|---|---|---|
| Average circularity | - | 0,90 | 0,87 | 0,90 | 0,88 | 0,95 |
| True density | g/cc | 3,59 | 3,61 | 3,57 | 3,62 | 3,61 |
| Void ratio between particles | % | 46,1 | 50,9 | 49,5 | 51,3 | 40,8 |

### Production of positive electrode active material using nickel composite hydroxide particles of Examples and Comparative Example as precursors

Of the nickel composite hydroxide particles of Examples 1 to 4 and Comparative Example, the nickel composite hydroxide particles of Example 1 and Comparative Example were each used to produce a positive electrode active material. When producing the positive electrode active material, preliminarily, a step of subjecting a nickel composite hydroxide particle to an oxidation treatment to prepare a nickel composite oxide particle was carried out. In the oxidation treatment, the nickel composite oxide particles of Example 1 and Comparative Example were prepared by calcination at a temperature of 690°C for 5 hours in an air atmosphere. Then, lithium hydroxide powder was added and mixed with each of the nickel composite oxide particles of Example 1 and Comparative Example so that the molar ratio of Li/(Ni + Co + Al) was 1.07 to obtain mixed powder of the nickel composite oxide particles and lithium hydroxide. The obtained mixed powder was calcined to obtain a lithium metal composite oxide particle. The calcination conditions were set to a calcination temperature of 700°C, a rate of temperature rise of 200°C/h, and a calcination time of 6 hours under an oxygen atmosphere. Moreover, a box furnace was used for the calcination.

The lithium metal composite oxide particles obtained as described above were washed with water. The washing was carried out by adding the lithium metal composite oxide to pure water, stirring the slurry liquid obtained for 10 minutes, and dehydrating the liquid.

Then, the wet cake obtained by the above washing was heat-treated at 150°C for 12 hours in a vacuum atmosphere to obtain a positive electrode active material.

A positive electrode plate was fabricated by using the positive electrode active material obtained as described above to assemble a battery for evaluation by using the positive electrode plate fabricated. Specifically, the obtained positive electrode active material, the conductive agent (acetylene black), and the binder (polyvinylidene difluoride) were mixed respectively at a weight ratio of 92 : 5 : 3, and N-methyl-2-pyrrolidone was added thereto, and the mixture was kneaded and dispersed to prepare a slurry of the positive electrode active material. An aluminum foil was coated with the slurry obtained by using a baker type applicator and the coating foil was dried at 60°C for 3 hours and at 150°C for 12 hours. A positive electrode plate was used such that the roll-pressed electrode after the drying was punched out to an area of 1.65 cm².

The positive electrode plate obtained as described above was placed on a lower lid of a part (manufactured by Hohsen Corp.) for a coin-type battery R2032 with the aluminum foil surface facing down, and a laminated film separator (laminated with a heat-resistant porous layer (thickness of 16 µm) on a porous polyethylene film) was placed the positive electrode plate. 300 µl of an electrolytic solution was injected therein. The electrolytic solution was used such that LiPF₆ was dissolved at a concentration of 1 mol/l in a mixed liquid of ethylene carbonate, dimethyl carbonate, and ethyl methyl carbonate at 30 : 35 : 35 (volume ratio). A lithium secondary battery (coin-type battery R2032) was fabricated by using a lithium metal as a negative electrode, placing the negative electrode on an upper side of the laminated film separator, covering the top via a gasket, and caulking it with a caulking machine.

### Lithium secondary battery evaluation items

### (1) Discharge capacity

Charge/discharge were carried out under the following conditions, and a discharge capacity of an initial charge/discharge was defined as the discharge capacity. The discharge capacity was evaluated as a ratio of a discharge capacity to that of Examples being 100.

### Test temperature: 25°C

Maximum charge voltage of 4.3 V, charge current of 0.2 C, constant current and constant voltage charge

Minimum discharge voltage of 2.5 V, discharge current of 0.2 C, constant current discharge

### (2) Charge/discharge efficiency

The charge/discharge efficiency was defined as a ratio of an initial discharge capacity to the initial charge capacity in the aforementioned charge/discharge test. It is noted that the charge/discharge efficiency was evaluated as a ratio of a charge/discharge efficiency to that of Examples being 100.

The results of lithium secondary battery evaluation are shown in Table 3 below.

**[Table 3]**

| | Example 1 | Comparative Example |
|---|---|---|
| Discharge capacity (mAh/g) | 100 | 96,9 |
| Charge/discharge efficiency (%) | 100 | 94,5 |

From Tables 2 and 3, Example 1 in which the positive electrode active material was prepared by using the precursors (nickel composite hydroxide particles) having a void ratio of 46.1%, gave excellent discharge capacity and charge/discharge efficiency. Moreover, from Table 2, the average circularity of the precursors in Example 1 was 0.90. Further, even Example 2 in which the void ratio was 50.9%, which falls within 45.0% or more and 55.0% or less like in Example 1, was found to enable excellent discharge capacity and charge/discharge efficiency as in Example 1 to be obtained. Moreover, from Table 2, the average circularity in Example 2 was 0.87, which falls within 0.85 or more and 0.94 or less like in Example 1. Further, even Example 3 in which the void ratio was 49.5%, which falls within 45.0% or more and 55.0% or less like in Example 1, was found to enable excellent discharge capacity and charge/discharge efficiency as in Example 1 to be obtained. Further, from Table 2, the average circularity in Example 3 was 0.90, which falls within 0.85 or more and 0.94 or less like in Example 1. Further, even Example 4 in which the void ratio was 51.3%, which falls within 45.0% or more and 55.0% or less like in Example 1, was found to enable excellent discharge capacity and charge/discharge efficiency as in Example 1 to be obtained. Further, from Table 2, the average circularity in Example 4 was 0.88, which falls within 0.85 or more and 0.94 or less like in Example 1. In contrast, in Comparative Example in which the positive electrode active material was fabricated by using the precursors having a void ratio of 40.8%, both the discharge capacity and the charge/discharge efficiency deteriorated as compared with Example 1. Moreover, from Table 2, the average circularity of the precursors in Comparative Example was 0.95.

### Industrial Applicability

The nickel composite hydroxide particles of the present invention can be utilized as the precursor of the positive electrode active material, capable of obtaining the positive electrode active material that can exhibit the high discharge capacity, and high charge/discharge efficiency by being mounted on the secondary battery using the non-aqueous electrolyte, and thereby it can be utilized in a wide range of fields such as mobile devices and vehicles.

## Claims

1. Nickel composite hydroxide particles that are precursors of a positive electrode active material of a non-aqueous electrolyte secondary battery, having a void ratio of 45.0% or more and 55.0% or less.

2. Nickel composite hydroxide particles that are precursors of a positive electrode active material of a non-aqueous electrolyte secondary battery, having an average circularity of 0.85 or more and 0.94 or less.

3. The nickel composite hydroxide particles according to claim 1, having an average circularity of 0.85 or more and 0.94 or less.

4. The nickel composite hydroxide particles according to any one of claims 1 to 3, wherein a particle diameter of the nickel composite hydroxide particles having a cumulative volume percentage of 50% by volume (D50) is 5.0 µm or more and 25.0 µm or less.

5. The nickel composite hydroxide particles according to any one of claims 1 to 4, wherein the nickel composite hydroxide particles comprise Ni, Co, and one or more additive metal elements M selected from the group consisting of Mn, Al, Ca, Ti, V, Cr, Zr, Nb, Mo, and W, and a molar ratio of Ni : Co : M is 1-x-y : x : y, where 0 < x ≤ 0.2 and 0 < y ≤ 0.1.

6. A positive electrode active material of a non-aqueous electrolyte secondary battery, wherein the nickel composite hydroxide particles according to any one of claims 1 to 5 are calcined with a lithium compound.

7. A method for producing a positive electrode active material of a non-aqueous electrolyte secondary battery, comprising: a step of adding a lithium compound to the nickel composite hydroxide particles according to any one of claims 1 to 5 to obtain a mixture, or a step of subjecting the nickel composite hydroxide particles according to any one of claims 1 to 5 to an oxidation treatment to prepare nickel composite oxide particles followed by addition of a lithium compound to obtain a mixture of the lithium compound and the nickel composite oxide particles; and a step of calcining the mixture.
